# EUROPEAN PATENT APPLICATION

(11) **EP 3 021 249 A1**
(43) Date of publication of application: **18.05.2016**
(21) Application number: 14306806.2
(22) Date of filing: 13.11.2014
(51) Int. Cl.: G06F 21/36, H04W 12/06

(54) **System for securely entering a private code**

(71) Applicant: GEMALTO SA, 92190 Meudon (FR)
(72) Inventor: Smadja, Philippe, 92190 Meudon (FR); Aussel, Jean-Daniel, 92190 Meudon (FR)
(74) Representative: Lotaut, Yacine Diaw

(57) **Abstract**

The present invention relates to a system (SYS) for securely entering a private code (PCODE) on a first electronic device (PD1). It is characterized in that said system (SYS) comprises:
- said first electronic device (PD1) which comprises a user interface (IHM) and a first unit processor (PR1) adapted to process a host application (App3), and a first secure execution platform (SEP1) adapted to process a secure application (App1); and
- a second electronic device (PD2) comprising a second secure execution platform (SEP2) adapted to process a target application (App2), and wherein:
- said first secure execution platform (SEP1) is adapted via said secure application (App1) to:
- generate a random scrambled image (Rs) comprising a plurality of characters (vc);
- transmit said random scrambled image (Rs) to said host application (App3);
- upon reception of selected positions (Ps) on said random scrambled image (Rs), map said selected positions (Ps) to a private code (PCODE);
- cipher said private code (PCODE) ;
- transmit said private code ciphered (PCODE_{C}) to said target application (App2);
- said first unit processor (PR1) is adapted via said host application (App3) to:
- receive said random scrambled image (Rs) from said secure application (App1) and display said random scrambled image (Rs) on said user interface (IHM);
- transmit said selected positions (Ps) on said random scrambled image (Rs) to said secure application (App1);
- said second secure execution platform (SEP2) is adapted via said target application (App2) to:
- receive said ciphered private code (PCODEc);
- decipher said ciphered private code (PCODEc) to obtain said private code (PCODE); and
- execute an action (A) based on said private code (PCODE).

## Description

### TECHNICAL FIELD

The present invention relates to a system for securely entering a private code on a first electronic device.

Such system may be used in a non-limitative example for any application which needs a secure code entry.

### BACKGROUND OF THE INVENTION

More and more payments may be executed via a device such as a mobile phone which communicates with a merchant contactless point of sale terminal, said mobile phone holding a contactless payment application for this purpose, such as Mastercard paypass MPP, or Visa Mobile payment application VMPA. In order to perform a contactless payment transaction, the point of sale terminal may request a private code and the user of said mobile phone enters his private code such as a personal identification code by means of the mobile phone's user interface, said private code being dedicated to said payment transaction. If the private code is valid, the payment transaction is performed by means of the unit processor of said mobile phone and by means of said point of sale terminal.

One problem of this prior art is that the private code which is stored in a memory of the mobile phone may be wrongly used by other applications in said mobile phone for which it was not intended.

### SUMMARY OF THE INVENTION

It is an object of the invention to provide a system for securely entering a private code on a first electronic device, said first electronic device comprising a user interface and a first unit processor adapted to process a host application, which avoids a private code dedicated to one application to be fraudulently used by another application.

To this end, there is provided a system for securely entering a private code on a first electronic device, wherein said system comprises:
- said first electronic device comprising a user interface and a first unit processor adapted to process a host application, and a first secure execution platform adapted to process a secure application; and
- a second electronic device comprising a second secure execution platform adapted to process a target application, and wherein:
- said first secure execution platform is adapted via said secure application to:
- generate a random scrambled image comprising a plurality of characters;
- transmit said random scrambled image to said host application;
- upon reception of selected positions on said random scrambled image, map said selected positions to a private code;
- cipher said private code;
- transmit said private code ciphered to said target application;
- said first processor is adapted via said host application to:
- receive said random scrambled image from said secure application and display said random scrambled image on said user interface;
- transmit said selected positions on said random scrambled image to said secure application;
- said second secure execution platform is adapted via said target application to:
- receive said ciphered private code;
- decipher said ciphered private code to obtain said private code; and
- execute an action based on said private code.

As we will see in further details, a secure execution platform acts as a firewall between applications belonging to said secure execution platform and other applications outside said secure execution platform. Therefore, the private code may not be retrieved from a secure execution platform by such other applications. Moreover, as the private code is ciphered, it may not be used by other applications to which it is not dedicated, as said other applications don't have the means to decipher said private code.

According to non-limitative embodiments of the invention, the system in accordance with the invention further comprises the following characteristics.

In a first non-limitative embodiment, the first secure execution platform and the second secure execution platform is a same secure execution platform which is a trusted execution environment.

In a second non-limitative embodiment, the first secure execution platform is a trusted execution environment and the second secure execution platform is a secure element.

In a third non-limitative embodiment, the first secure execution platform is a secure element and the second secure execution platform is a secure element.

In a first non-limitative embodiment, said first electronic device is a portable electronic device and said second electronic device is a remote server.

In a second non-limitative embodiment, said first electronic device and said second electronic device are a same portable electronic device.

In a non-limitative embodiment, said first electronic device is a mobile phone, or a tablet, or a smart phone, or a notebook.

In a non-limitative embodiment, the target application is a bank payment application or a one-time password generation application.

In addition, there is provided a first electronic device for securely entering a private code, said first electronic device comprising a user interface and a first unit processor adapted to process a host application, wherein said first electronic device further comprises a first secure execution platform adapted to process a secure application, and wherein:
- said first secure execution platform is adapted via said secure application to:
- generate a random scrambled image comprising a plurality of characters;
- transmit said random scrambled image to said host application;
- upon reception of selected positions on said random scrambled image, map said selected positions to a private code;
- cipher said private code;
- transmit said private code ciphered to a target application within a second secure execution platform of a second electronic device;
- said first unit processor is adapted via said host application to:
- receive said random scrambled image from said secure application and display said random scrambled image on said user interface; and
- transmit said selected positions on said random scrambled image to said secure application.

According to non-limitative embodiments, the first electronic device further comprises the following characteristics.

In a first non-limitative embodiment, the first secure execution platform and the second secure execution platform is a same secure execution platform which is a trusted execution environment.

In a second non-limitative embodiment, the first secure execution platform is a trusted execution environment and the second secure execution platform is a secure element.

In a third non-limitative embodiment, the first secure execution platform is a secure element and the second secure execution platform is a secure element.

In a non-limitative embodiment, said private code is ciphered using public key algorithm.

In a non-limitative embodiment:
- said first unit processor is further adapted via said host application to:
- request a certificate chain to said target application, said certificate chain comprising a public key;
- receive said certificate chain from said target application of said second electronic device;
- transmit said certificate chain to said secure application;
- said first secure execution platform is further adapted via said secure application to:
- receive said certificate chain from said host application;
- check said certificate chain;
- if said certificate chain is valid, store said public key.

In a non-limitative embodiment:
- said first unit processor is further adapted via said host application to
- request a challenge to said target application;
- receive from said second secure execution platform a challenge generated via said target application;
- transmit said challenge to said secure application;
- said secure execution platform is further adapted via said secure application to receive said challenge and to cipher said private code based on said challenge.

In addition, there is provided a portable electronic device for securely entering a private code, wherein said portable electronic device comprises:
- a user interface and a first unit processor adapted to process a host application;
- a first secure execution platform adapted to process a secure application; and
- a second secure execution platform adapted to process a target application,
and wherein:
- said first secure execution platform is adapted via said secure application to:
- generate a random scrambled image comprising a plurality of characters;
- transmit said random scrambled image to said host application;
- upon reception of selected positions on said random scrambled image, map said selected positions to a private code;
- cipher said private code ;
- transmit said private code ciphered to said target application;
- said first processor is adapted via said host application to:
- receive said random scrambled image from said secure application and display said random scrambled image on said user interface;
- transmit said selected positions on said random scrambled image to said secure application;
- said second secure execution platform is adapted via said target application to:
- receive said ciphered private code;
- decipher said ciphered private code to obtain said private code; and
- execute an action based on said private code.

According to non-limitative embodiments, the portable electronic device further comprises the following characteristics.

In a first non-limitative embodiment, the first secure execution platform and the second secure execution platform is a same secure execution platform which is a trusted execution environment.

In a second non-limitative embodiment, the first secure execution platform is a trusted execution environment and the second secure execution platform is a secure element.

In a third non-limitative embodiment, the first secure execution platform is a secure element and the second secure execution platform is a secure element.

In a non-limitative embodiment, said portable electronic device is a mobile phone, or a tablet, or a smart phone, or a notebook.

In a non-limitative embodiment, the target application is a bank payment application or a one-time password generation application.

In a non-limitative embodiment, said private code is ciphered using public key algorithm.

In a non-limitative embodiment:
- said first unit processor is further adapted via said host application to:
- request a certificate chain to said target application, said certificate chain comprising a public key;
- receive said certificate chain from said target application;
- transmit said certificate chain to said secure application;
- said first secure execution platform is further adapted via said secure application to:
- receive said certificate chain from said host application;
- check said certificate chain;
- if said certificate chain is valid, store said public key.

In a non-limitative embodiment:
- said second secure execution platform is further adapted via said target application to generate a challenge and to transmit said challenge to said host application upon request;
- said first unit processor is further adapted via said host application to
- receive from said second secure execution platform a challenge generated via said target application;
- transmit said challenge to said secure application;
- said secure execution platform is further adapted via said secure application to receive said challenge and to cipher said private code based on said challenge and on said public key.

In addition, there is provided a method for securely entering a private code on a first electronic device, said first electronic device comprising a user interface and a first unit processor adapted to process a host application, wherein said method comprises:
- the generation of a random scrambled image comprising a plurality of characters by means of a first secure execution platform of said first electronic device via a secure application;
- the transmission of said random scrambled image to said host application by means of said first secure execution platform via said secure application;
- the reception of said random scrambled image and the display of said random scrambled image on said user interface by means of said first unit processor via said host application;
- the transmission of said selected positions on said random scrambled image to said secure application by means of said first unit processor via said host application;
- upon reception of selected positions on said random scrambled image, the mapping of said selected positions to a private code by means of said first secure execution platform via said secure application;
- the ciphering of said private code by means of said first secure execution platform;
- the transmission of said ciphered private code to a target application of a second electronic device within a second secure execution platform by means of said first secure execution platform via said secure application;
- the reception of said ciphered private code by means of said second secure execution platform via said target application;
- the deciphering of said ciphered private code to obtain said private code by means of said second secure execution platform via said target application; and
- the execution of an action based on said private code by means of said second secure execution platform via said target application.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates schematically a non-limitative embodiment of the system for securely entering a private code according to the invention, said system comprising a first electronic device and a second electronic device;
- Fig. 2 illustrates schematically a non-limitative embodiment of the first electronic device of the system of Fig. 1 and its different functionalities;
- Fig. 3 illustrates schematically a non-limitative embodiment of the second electronic device of the system of Fig. 1 and its different functionalities;
- Fig. 4 illustrates schematically the system for securely entering a private code according to a first non-limitative embodiment of the invention;
- Fig. 5 illustrates schematically a non-limitative embodiment of the system for securely entering a private code according to a second non-limitative embodiment of the invention;
- Fig. 6 illustrates schematically the system for securely entering a private code according to a third non-limitative embodiment of the invention;
- Fig. 7 illustrates schematically the system for securely entering a private code according to a fourth non-limitative embodiment of the invention;
- Fig. 8 is a schematic organization chart of the method for securely entering a private code which is carries out by the system of Fig. 1 to Fig. 7;
- Fig. 9 is a sequence diagram illustrating the method of Fig. 7 comprising further non-limitative steps.

### DESCRIPTION OF EMBODIMENTS OF THE INVENTION

In the following description, well-known functions or constructions by the man skilled in the art are not described in detail since they would obscure the invention in unnecessary detail.

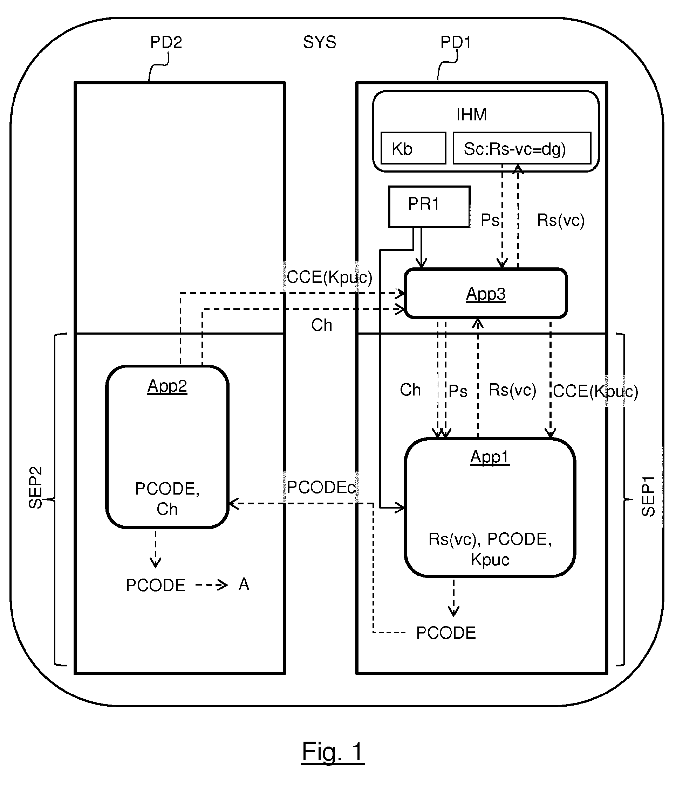

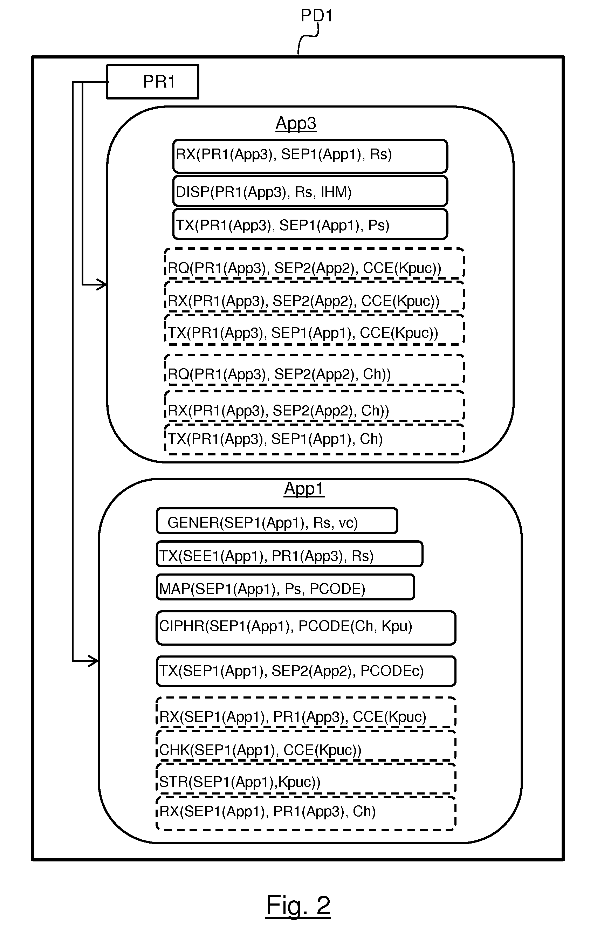

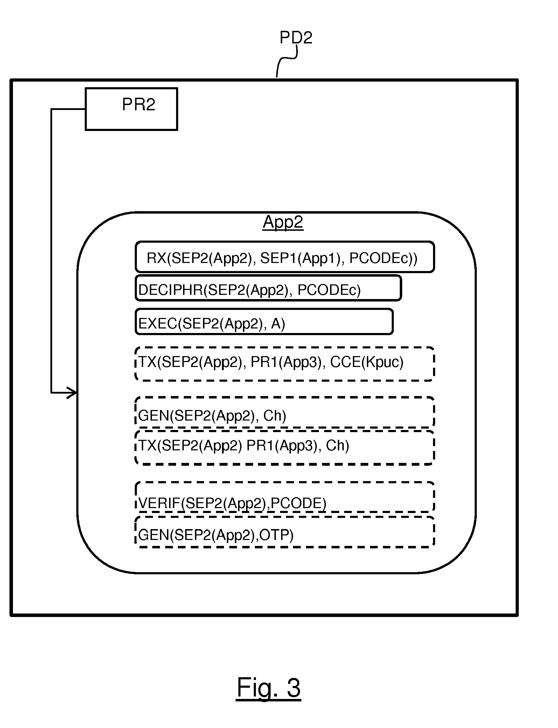

The present invention relates to a system SYS for securely entering a private code PCODE on a first electronic device PD1. Said system SYS is illustrated in Fig. 1 and the different functionalities of its different components are illustrated in Fig. 2 and in Fig. 3.

The system SYS comprises:
- said first electronic device PD1; and
- a second electronic device PD2.

As illustrated in Fig. 1, the first electronic device PD1 comprises:
- a first unit processor PR1 adapted to process a host application App3;
- a user interface IHM comprising in a non-limitative embodiment a screen Sc and a keyboard Kb;
- said host application App3; and
- a first secure execution platform SEP1 adapted to process a secure application App1.

As illustrated in Fig. 1, the second electronic device PD2 comprises:
- a second secure execution platform SEP2 adapted to process a target application App2.

For the following, an application is a set of one or more programs designed to carry out operations for a specific purpose.

It is to be noted that a unit processor comprises one or a plurality of processors.

As will be described hereinafter, the first electronic device PD1 will permit the input of the private code PCODE in a secure manner, said private code PCODE being used by the second application App2 of said second electronic device PD2.

In non-limitative embodiments, the private code is a pin code PIN, a passphrase, a passcode etc.

The target application App2 is the application which supports an encrypted code verification. In a non-limitative example, the target application App2 is a bank payment application, such as an EMV ("Europay Mastercard Visa") application.

This non-limitative example will be taken for the following.

In order to perform a purchase, the user puts his first electronic device PD1 onto the merchant point of sale terminal POS or brings it near said point of sale terminal POS in a contactless way. The point of sale terminal POS requests the private code for the bank payment transaction. The user enters his private code PCODE by means of the user interface IHM via the keyboard kb or screen (if said screen is a tactile screen sc) of the first electronic device PD1.

For the following, a secure execution platform SEP is a secure area within the electronic devices PD1, PD2. It ensures that data and programs related to an application which are stored within said secure area are protected with respect to confidentiality and integrity. Other applications outside the secure execution platform SEP may not access to those data and programs without authorization. A secure execution platform SEP acts as a firewall with regards to said other applications. In a first non-limitative embodiment, a secure execution platform SEP comprises a specific operating system for executing the applications which are stored within the secure area. Said operating system is different from the operating system of the first unit processor PR1 which executes the host application App3. In a second non-limitative embodiment, the first secure execution platform SEP1 comprises the operating system of the first unit processor PR1 (which executes the host application App3) and a specific secure software enabling secure execution of said secure application App1. Therefore, a second application App2 of the second secure execution platform SEP2 may not access fraudulently to the data of the first application App1 of the first secure execution platform SEP1 unless said first application App1 authorized such access.

The first electronic device PD1 and the second electronic device PD2 are described hereinafter in details.

### • First electronic device PD1

In a non-limitative embodiment, the first electronic device PD1 is a portable electronic device.

In non-limitative examples, the portable electronic device is a mobile phone, a tablet, a smart phone, a notebook etc.

In a non-limitative example, the host application App3 is a mobile phone application.

As will be described below, the secure application App1 will permit a user to securely enter a private code without the possibility for any malware to read his private code and use it fraudulently.

The secure application App1 is stored (its data and its programs) in the first secure execution platform SEP1.

The functionalities of the first electronic device PD1 are illustrated in Fig. 2.

They are processed by the first electronic device PD1 by means of the first unit processor PR1 via the host application App3, or by means of said first secure execution platform SEP1 via the secure application App1.

As illustrated in Fig. 2, the first secure execution platform SEP1 of the first electronic device PD1 is adapted via said secure application App1 to:
- generate a random scrambled image Rs comprising a plurality of characters vc (function illustrated in Fig. 2 GENER(SEP1 (App1), Rs, vc));
- transmit said random scrambled image Rs to said host application App3 (function illustrated in Fig. 2 TX(SEP1 (App1), PR1 (App3), Rs));
- upon reception of selected positions Ps on said random scrambled image Rs, map said selected positions Ps to a private code PCODE (function illustrated in Fig. 2 MAP(SEP1 (App1), Ps, PCODE));
- cipher said private code PCODE (function illustrated in Fig. 2 CIPHR(SEP1(App1), PCODE(Ch, Kpu))).
- transmit said private code ciphered PCODEc to said target application App2 (function illustrated in Fig. 2 TX(SEP1 (App1), SEP2(App2), PCODEc)).

In a non-limitative embodiment, the characters vc are digits dg, and there are ten digits.

The scrambled image Rs is a first security means to enter the private code PCODE as the user of the first electronic device PD1 is able to recognize the characters vc displayed within said image, but not a fraudulent application (also called malware) running in said first electronic device PD1. It is to be noted that the generation of the random scrambled image Rs is performed upon request of the host application App3.

Moreover, as the characters vc are randomly displayed, it adds a supplementary security for the input of the private code.

When the user selects the characters vc on the scrambled image Rs, the corresponding selected positions Ps are sent to the first application App1 within said secure execution platform SEP1.

The mapping of the selected positions Ps to the private code PCODE is performed in a non-limitative example via an association table between said selected positions Ps (which corresponds to some pixels of the screen Sc) and the characters vc at these positions Ps.

When the random scrambled image Rs has been generated by the first application App1, said first unit processor PR1 of the first electronic device PD1 is adapted via said host application App3 to:
- receive said random scrambled image Rs from said secure application App1 (function illustrated in Fig. 2 RX(PR1 (App3), SEP1 (App1), Rs)); and
- display said random scrambled image Rs on said user interface IHM, in particular on the screen sc (function illustrated in Fig. 2 DISP(PR1 (App3), Rs, IHM)).

When the user has selected the characters vc on the user interface IHM which correspond to its private code PCODE, said first electronic device PD1 is adapted by means of said first unit processor PR1 via said host application App3 to transmit said selected positions Ps on said random scrambled image Rs to said secure application App1 (function illustrated in Fig. 2 TX(PR1 (App3), SEP1 (App1), Ps)).

For the following, the functionalities which are illustrated in dotted lines are optional are they are performed in non-limitative embodiments.

In a first non-limitative embodiment, the private code PCODE is ciphered using a public key algorithm. That is to say the encryption is asymmetric as it uses a pair of public key KpuA-private key KpvA. A public key Kpuc (also called code encryption public key) is used for the ciphering (also called encryption) of the private code PCODE.

In non-limitative embodiments, said public key algorithm uses a RSA algorithm or ELC algorithm. These algorithms being well-known by the man skilled in the art, they are not described here.

In order to receive the code encryption public key Kpuc, in a non-limitative embodiment, said first unit processor PR1 of the first electronic device PD1 is further adapted via said host application App3 to:
- request a certificate chain CCE to said target application App2, said certificate chain CCE comprising a public key Kpuc (function illustrated in dotted lines in Fig. 2 RQ(PR1 (App3), SEP2(App2), CCE(Kpuc)));
- receive said certificate chain CCE from said target application App2 (function illustrated in dotted lines in Fig. 2 RX(PR1 (App3), SEP2(App2), CCE(Kpuc)));
- transmit said certificate chain CCE to said secure application App1 (function illustrated in dotted lines in Fig. 2 TX(PR1 (App3), SEP1(App1), CCE(Kpuc)));

It is to be noted that the certificate request stage may be triggered if there is a human interface in the host application App3 enabling the user to access to the target application App2 and when said human interface is used by said user.

Said first secure execution platform SEP1 of the first electronic device PD1 is further adapted via said secure application App1 to:
- receive said certificate chain CCE from said host application App3 (function illustrated in dotted lines in Fig. 2 RX(SEP1 (App1), PR1 (App3), CCE(Kpuc)));
- check said certificate chain CCE (function illustrated in dotted lines in Fig. 2 CHK(SEP(App1), CCE(Kpuc))));
- if said certificate chain CCE is valid, store said public key Kpuc (function illustrated in dotted lines in Fig. 2 (STR(SEP1(App1),Kpuc))).

Said public key Kpuc is therefore securely stored in the first secure execution platform SEP1.

It is to be noted that if said certificate chain CCE is not valid, the random scrambled image Rs may not be displayed on the user interface IHM of the first electronic device PD1. It is to be reminded that the scrambled image Rs is generated upon request of said host application App3. If the certificate chain CCE is not valid, there won't be any generation of scrambled image Rs by the secure application App1.

It is to be noted that the secure execution platform SEP1 is adapted via said secure application App1 to store the certificate of the certificate authority used to sign the last certificate of the certificate chain CCE.

Said certificate chain CCE comprises the code encryption public key Kpuc corresponding to the private key of the target application used to decipher the ciphered PCODE, a signature Sg1 performed with the root private key KpvA of the certificate authority.

When said first electronic device PD1 via the secure application App1 checks the different certificates of the certificate chain CCE, it checks that it has been signed by the right certificate authority such as VISA®, MASTERCARD® etc. The checking is performed with the root public key KpuA corresponding to the root private key KpvA of the certificate authority.

The certificate checking being well-known by the man skilled in the art, it is not described here. The root public key KpuA is stored in the first secure execution platform SEP1 of the first electronic device PD1. It is to be noted that the storage of the root public key KpuA has been previously be performed during a customization phase before said first electronic device PD1 is dispatched to the end-user or during the download of the secure application App1 in the first secure execution platform SEP1 of the first electronic device PD1.

In a non-limitative embodiment, for the ciphering of the private code PCODE with the public key Kpu, said first unit processor PR1 of said first electronic device PD1 is further adapted via said host application App3 to:
- request a challenge Ch to said target application App2 (function illustrated in dotted lines in Fig. 2 RQ(PR1(App3, SEP2(App2), Ch));
- receive a challenge Ch from said target application App2 of said second electronic device PD2 (function illustrated in dotted lines in Fig. 2 RX(PR1(App3), SEP2(App2), Ch))); and
- transmit said challenge Ch to said secure application App1 (function illustrated in dotted lines in Fig. 2 TX(PR1 (App3), SEP1(App1), Ch))).

It is to be noted that said challenge Ch is a random generated by said second execution platform SEP2 via the second application App2.

In a non-limitative embodiment, said challenge Ch is transmitted when the first unit processor PR1 via the host application App3 transmits the selected positions Ps on said random scrambled image Rs to said secure application App1.

Therefore, said first secure execution platform SEP1 of said first electronic device PD1 is further adapted via said secure application App1 to:
- receive said challenge Ch App1 (function illustrated in dotted lines in Fig. 2 RX(SEP1 (App1), PR1 (App3), Ch))).

With this challenge Ch, the encrypted private code PCODEc is transmitted more securely to said target application App2.

Moreover, the challenge Ch avoids having a same encrypted private code PCODEc for all the target application sessions. Hence, even if a malware succeeds in getting the encrypted private code PCODEc, it won't be able to use it for another payment application session. It is to be noted that a target application session begins with the first request from the host application App3 to the target application App2, that is to say with the first certificate request.

In a second non-limitative embodiment, said private code PCODE is ciphered with a shared symmetric key.

A same secret key Ks is shared between the first secure execution platform SEP1 and the second secure execution platform SEP2.

The first secure execution platform SEP1 encrypts the private code PCODE with said secret key Ks, and the second secure execution platform SEP2 decrypts said private code PCODE with said secret key Ks.

In non-limitative examples, said symmetric key algorithm is a DES or a triple DES or an AES algorithm. These algorithms being well-known by the man skilled in the art, they are not described here.

### • Second electronic device PD2

The functionalities of the second electronic device PD2 are illustrated in Fig. 3. They are processed by the second electronic device PD2 by means of the second secure execution platform SEP2 via said target application App2. When the private code PCODE has been ciphered, the second secure execution platform SEP2 of said second electronic device PD2 is adapted via said target application App2 to:
- receive said ciphered private code PCODEc from said secure application App1 (function illustrated in Fig. 3 RX(SEP2(App2), SEP1 (App1) PCODEc));
- decipher said ciphered private code PCODEc to obtain said private code PCODE (function illustrated in Fig. 3 DECIPHR(SEP2(App2), PCODEc)); and
- execute an action A based on said private code PCODE (function illustrated in Fig. 3 EXEC(SEP2(App2), A)).

It is to be noted that said second secure application App2 is stored (its data and its programs) in the second secure execution platform SEP2.

Therefore, the private code PCODE is securely deciphered in a secure execution platform.

In the non limitative-embodiment of the target application App2 which is a bank payment application, the action A is a verification of said private code PCODE (function illustrated in dotted lines in Fig. 3 VERIF(SEP2(App2),PCODE)).

In another non-limitative embodiment, when the target application App2 is a one-time password generation, the action A is the generation of said one-time password OTP based on said private code PCODE (function illustrated in dotted lines in Fig. 3 GEN(SEP2(App2),OTP)).

In a non-limitative embodiment, when a public key algorithm is used for the ciphering of the private code PCODE, for the transmission of the code encryption key Kpuc, said second secure execution platform SEP2 of said second electronic device PD2 is further adapted via said target application App2 to transmit said certificate chain CCE to said host application App3 upon request (function illustrated in Fig. 3 TX(SEP2(App2), PR1 (App3), CCE(Kpuc))).

In a non-limitative embodiment, for the ciphering of the private code PCODE, said second secure execution platform SEP2 of said second electronic device PD2 is further adapted via said target application App2 to:
- generate a challenge Ch (function illustrated in dotted lines in Fig. 3 GEN(SEP2(App2), Ch)); and
- transmit said challenge Ch to said host application App3 upon request (function illustrated in dotted lines in Fig. 3 TX(SEP2(App2) PR1 (App3), Ch))).

It is to be noted that said challenge Ch may be used for the ciphering of the private code PCODE using a public key algorithm or using a shared symmetric key algorithm.

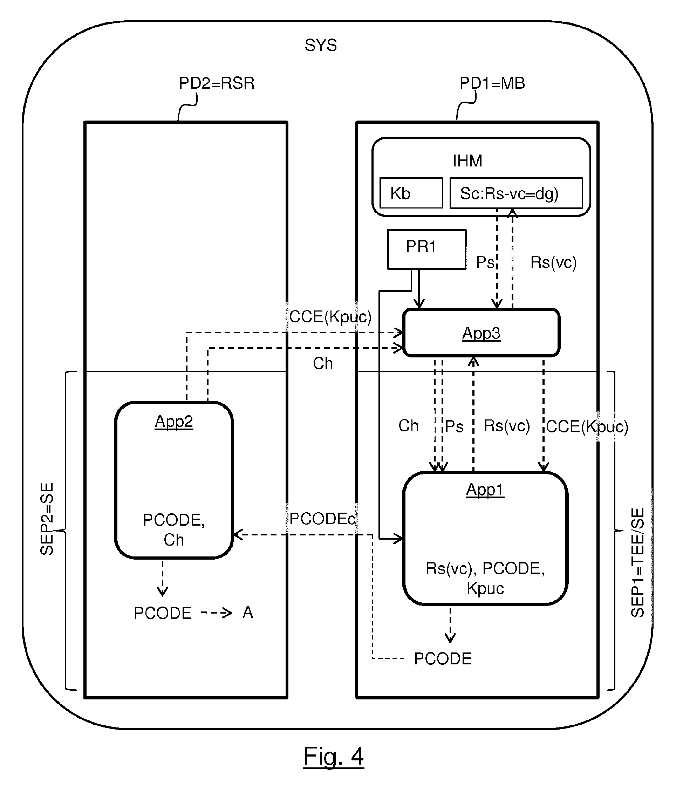

Different embodiments for the architecture of the system SYS may be applied which are described hereinafter and illustrated in the Fig. 4 to 7.

### • First non-limitative embodiment

In a first non-limitative embodiment, the first electronic device PD1 and the second electronic device PD2 are different.

When the first electronic device PD1 and the second electronic device PD2 are different, in a first non-limitative variant, the first electronic device PD1 is a portable electronic device, and the second electronic device PD2 is a remote server RSR as illustrated in Fig. 4. In a non-limitative example, the first portable electronic device PD1 is a mobile phone MB. The mobile phone is taken as a non-limitative example in the following.

In other non-limitative examples, the first portable device PD1 is a tablet, a smart phone, a notebook etc.

In this embodiment, in a non-limitative example, the target application App2 is a contact payment application and the host application App3 which is the mobile phone application serves as a gateway that conveys the EMV protocol and the remote server RSR is connected to a banking network. The payment application uses only the contact interface of the mobile phone MB.

In this case, the private code PCODE is never in clear in the first electronic device PD1. The user securely authenticates to the remote server RSR.

In this case, in a non-limitative variant, the second secure execution platform SEP2 within said remote server RSR is a secure element SE which is a hardware security module.

In this case, in non-limitative variants, the first secure execution platform SEP1 is a trusted execution environment TEE or a secure element SE.

In this case, the encryption of the private code PCODE may be performed using a public key algorithm described above.

It is to be noted that a shared symmetric key algorithm may be also used, but the EMV application App2 needs to be modified accordingly.

It is to be noted that a TEE is a secure area that resides in the main processor of a mobile phone (or any other portable electronic device such as smart phone, tablets etc.). It ensures that sensitive data are stored, processed and protected in a trusted environment.

The TEE manages and executes safe execution of authorized security softwares, known as 'trusted applications'. TEE as an isolated execution environment permits the trusted applications to provide protection, confidentiality, integrity and data access rights.

When the first electronic device PD1 and the second electronic device PD2 are different, in a second non-limitative variant (not illustrated) the first electronic device PD1 is a portable electronic device, and the second electronic device PD2 is a secure element SE. The secure element is in a non-limitative embodiment a smart card.

This secure element SE may be a NFC "Near Field Communication" card, or a card which is connected to the portable electronic device PD1 via an USB connection in a non-limitative example.

### • Second non-limitative embodiment

In a second non-limitative embodiment, the first electronic device PD1 and the second electronic device PD2 are the same electronic device. In a non-limitative embodiment, the electronic device PD1/PD2 is a portable electronic device. In a non-limitative example, the portable electronic device PD1/PD2 is a mobile phone MB. The mobile phone is taken as a non-limitative example in the following.

In other non-limitative examples, the portable electronic device PD1/PD2 is a tablet, a smart phone, a notebook etc.

Hence, the portable electronic device PD1/PD2 for securely entering a private code PCODE, wherein said portable electronic device PD1/PD2 comprises:
- a user interface IHM and a first unit processor PR1 adapted to process a host application App3;
- a first secure execution platform SEP1 adapted to process a secure application App1; and
- a second secure execution platform SEP2 adapted to process a target application App2,
- and wherein:
- said first secure execution platform SEP1 is adapted via said secure application App1 to:
- generate a random scrambled image Rs comprising a plurality of characters vc;
- transmit said random scrambled image Rs to said host application App3;
- upon reception of selected positions Ps on said random scrambled image Rs, map said selected positions Ps to a private code PCODE;
- cipher said private code PCODE ;
- transmit said private code ciphered PCODEc to said target application App2;
- said first processor PR1 is adapted via said host application App3 to:
- receive said random scrambled image Rs from said secure application App1 and display said random scrambled image Rs on said user interface IHM;
- transmit said selected positions Ps on said random scrambled image Rs to said secure application App1;
- said second secure execution platform SEP2 is adapted via said target application App2 to:
- receive said ciphered private code PCODEc;
- decipher said ciphered private code PCODEc to obtain said private code PCODE; and
- execute an action A based on said private code PCODE.

In this case, in a non-limitative example, the mobile phone MB is connected to the merchant contactless point of sale POS. the target application App2 is a contactless payment application, for instance mastercard paypass MPP or visa mobile payment application VPMA. If the private code PCODE is required, it is never entered on the merchant POS, but it is entered on the mobile phone MB.

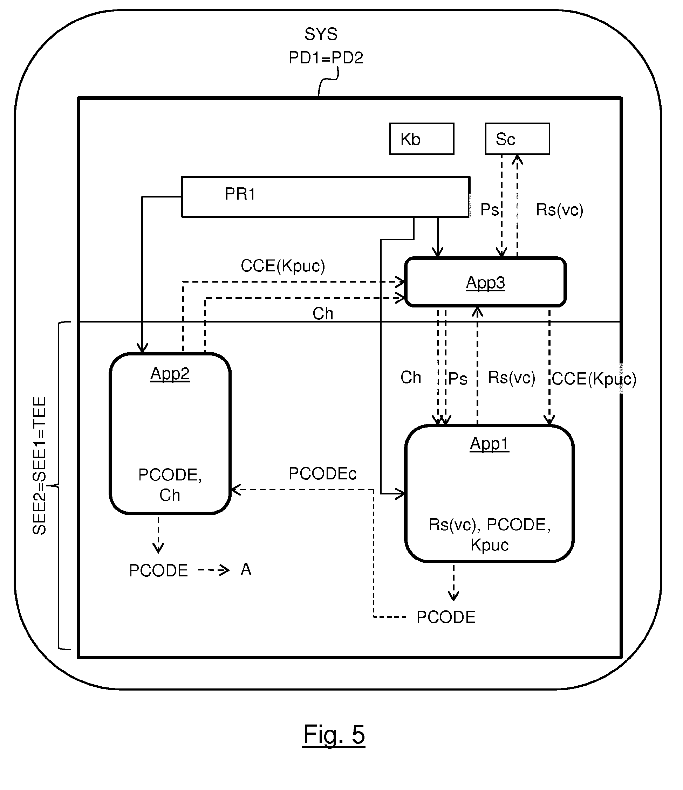

When the first electronic device PD1 and the second electronic device PD2 are the same device, in a first non-limitative variant, the first secure execution platform SEP1 and the second secure execution platform SEP2 is a same secure execution platform which is a trusted execution environment TEE as illustrated in Fig. 5.

In this case, the secure application App1 and the target application App2, which is in the non-limitative example an EMV payment application, belong to the same security domain.

In this case, the encryption of the private code PCODE is performed using a proprietary encryption algorithm. As described before, a shared symmetric key algorithm may be also used but the EMV application App2 needs to be modified accordingly.

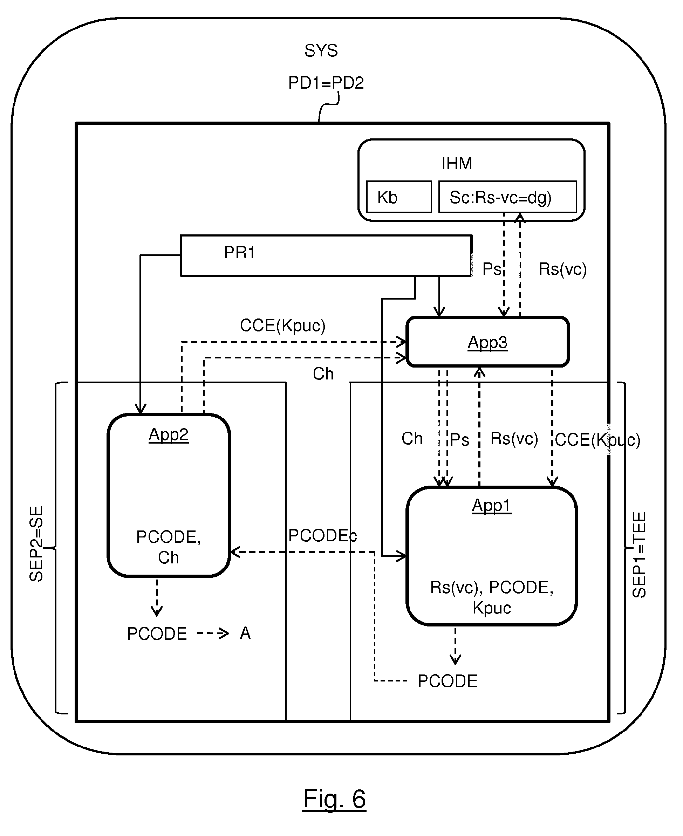

When the first electronic device PD1 and the second electronic device PD2 are the same device, in a second non-limitative variant, the first secure execution platform SEP1 is a trusted execution environment TEE and the second secure execution platform SEP2 is a secure element SE as illustrated in Fig. 6.

The secure element is in a non-limitative embodiment a smart card.

In a non-limitative example, when the first electronic device PD1 is a mobile phone MB or any other portable electronic device which permits to perform a mobile phone application App3, the secure element SE may be the SIM card which runs the bank payment application App2 supporting the encrypted code verification.

In this case, the encryption of the private code PCODE is performed using a public key algorithm described above or a shared symmetric key algorithm described above.

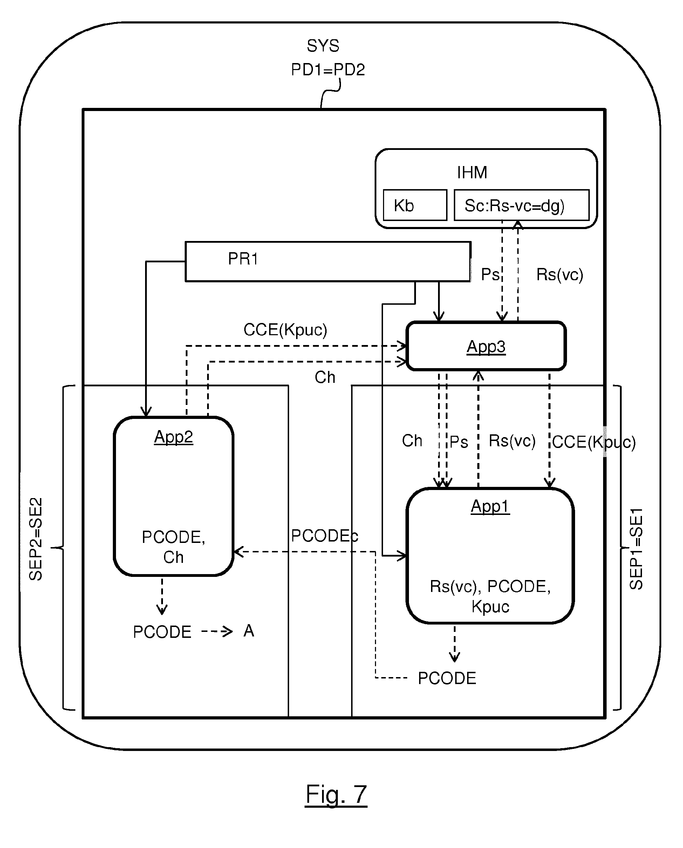

When the first electronic device PD1 and the second electronic device PD2 are the same device, in a third non-limitative variant, the first secure execution platform SEP1 is a first secure element SE1 and the second secure execution platform SEP2 is a second secure element SE2 as illustrated in Fig. 7.

The first secure element SE1 may be the SIM card, whereas the second secure element SE2 is a dedicated payment card which runs the bank payment application App2 supporting the encrypted code verification, such as in a non-limitative example an EMV ("Europay Mastercard Visa") secure element SE2.

In this case, the encryption of the private code PCODE is performed using a public key algorithm described above or a shared symmetric key algorithm described above.

Hence, the system SYS which has been described carries out a method MTH for securely entering a private code PCODE on a first electronic device PD1, said first electronic device PD1 comprising a first unit processor PR1, a user interface IHM and a host application App3.

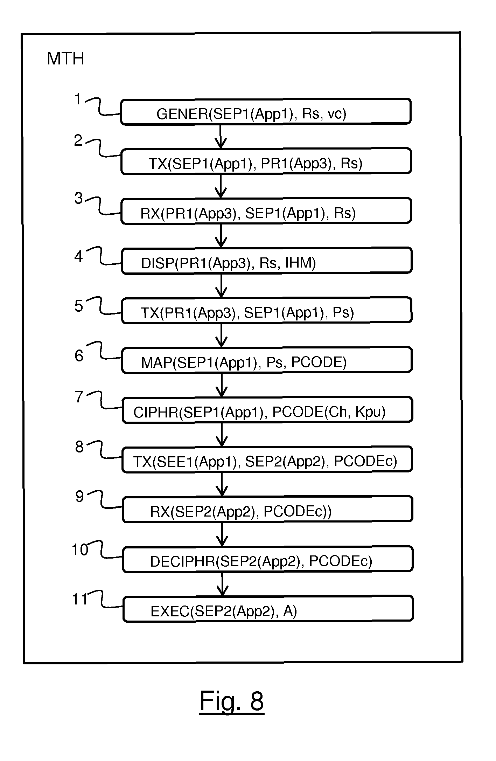

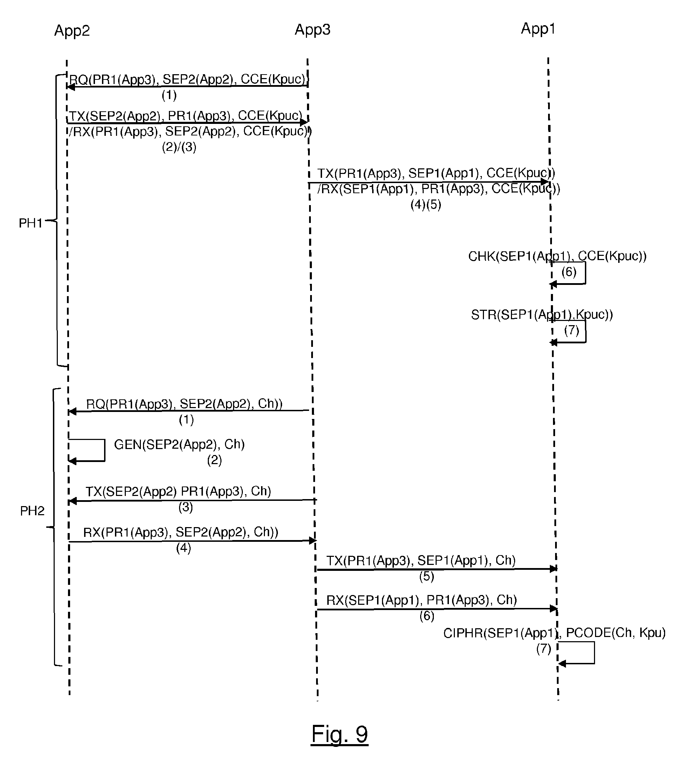

Said method MTH is illustrated in Fig. 8 and Fig. 9.

As illustrated in Fig. 8, **in step 1),** the first secure execution platform SEP1 generates a random scrambled image Rs comprising a plurality of characters vc via said secure application App1.

**In step 2),** the first secure execution platform SEP1 transmits said random scrambled image Rs to said host application App3 via said secure application App1.

**In step 3),** the first unit processor PR1 receives said random scrambled image Rs and display said random scrambled image Rs on said user interface IHM via said host application App3 **(step 4).**

The user selects position Ps on said random scrambled image Rs which is displayed on the user interface IHM.

**In step 5),** the first unit processor PR1 transmits said selected positions Ps on said random scrambled image Rs to said secure application App1 via said host application App3.

**In step 6),** upon reception of selected positions Ps on said random scrambled image Rs, the first secure execution platform SEP1 maps said selected positions Ps to a private code PCODE via said secure application App1.

**In step 7),** the first secure execution platform SEP1 ciphers said private code PCODE.

**In step 8),** the first secure execution platform SEP1 transmits via said secure application App1 said ciphered private code PCODEc to said target application App2 of a second electronic device PD2 within a second secure execution platform SEP2.

**In step 9),** the second secure execution platform SEP2 receives said ciphered private code PCODEc via said target application App2;

**In step 10),** the secure execution platform SEP2 deciphers said ciphered private code PCODEc to obtain said private code PCODE via said second application App2;

**In step 11),** the secure execution platform SEP2 executes an action A based on said private code PCODE via said target application App2.

Fig. 9 illustrates the method MTH which comprises the further non-limitative stages of:
- the code encryption key Kpuc transmission to the secure application App1 via a certificate CCE; and
- ciphering the private code PCODE with said code encryption key Kpuc and a challenge Ch by said secure application App1.

The code encryption key transmission phase PH1 is described hereinafter.

**In step 1),** the first unit processor PR1 requests via said host application App3 a certificate chain CCE to said target application App2, said certificate chain CCE comprising a public key Kpuc.

**In step 2),** the second secure execution platform SEP2 transmits via said target application App2 said certificate chain CCE to said host application App3 upon request.

**In step 3),** the first unit processor PR1 receives via said host application App3 said certificate chain CCE from said target application App2.

**In step 4),** the first unit processor PR1 transmits via said host application App3 said certificate chain CCE to said secure application App1.

Upon reception on said certificate chain CCE **(in step 5),** the first secure execution platform SEP1 checks via said first application App1 said certificate chain CCE **(step 6).**

**In step 7),** if said certificate chain CCE is valid, the first secure execution platform SEP1 stores via said first application App1 said public key Kpuc.

The ciphering stage PH2 is described below.

**In step 1),** the first unit processor PR1 requests via said host application App3 a challenge Ch to said target application App2;

**In step 2),** the second secure execution platform SEP2 generates via said target application App2 a challenge Ch, and **in step 3)** transmits said challenge Ch to said host application App3 upon request.

**In step 4),** the first unit processor PR1 receives via said host application App3 said challenge Ch, and **in step 5)** transmits via said host application App3 said challenge Ch to said secure application App1. In the non-limitative example, the challenge Ch is transmitted at the same time as the transmission of the selected positions Ps of said random scrambled image Rs to said secure application App1.

**In step 6),** the first secure execution platform SEP1 receives via said secure application App1 said challenge Ch and in **step 7)** ciphers via said secure application App1 said private code PCODE based on said challenge Ch and on said public key Kpuc.

It is to be noted that the code encryption key transmission stage and the ciphering stage are performed during different times.

Then, afterwards, the steps 1 to 6 and 8 to 11 of Fig. 8 described before are processed.

It is to be understood that the present invention is not limited to the aforementioned embodiments and variations and modifications may be made without departing from the scope of the invention. In the respect, the following remarks are made.

In a non-limitative embodiment, the secure application App1 may be implemented in the target application App2 such as the EMV payment application if for example, the EMV application provider decided to do so and modify the EMV application app2 accordingly.

Hence, some embodiments of the invention may comprise one or a plurality of the following advantages:
- the target application App2 doesn't store a pair of keys and associated certificate and doesn't push the public key Kpuc to the secure application App1 and finally doesn't decrypt the encrypted private code PCODE. In consequence, the user private code PCODE may not be retrieved by fraudulent applications. The private code may only be decrypted by valid and allowed application;
- The host application App3 may not retrieve the user private code PCODE, only secure application may deduce the private code PCODE from positions Ps on the image Rs;
- No modification is to be made for the target application App2, such as the EMV payment application which are developed by the EMV application provider, such as Mastercard®, Visa®, Amex® etc.. The existing EMV security is enhanced as the private code is protected;
- The private code is never stored in clear in the potentially unsecure first electronic device PD1 and therefore may not be retrieved by fraudulent application and/or unsecure unit processor.

## Claims

1. A system (SYS) for securely entering a private code (PCODE) on a first electronic device (PD1), wherein said system (SYS) comprises:
- said first electronic device (PD1) comprising a user interface (IHM) and a first unit processor (PR1) adapted to process a host application (App3), and a first secure execution platform (SEP1) adapted to process a secure application (App1); and
- a second electronic device (PD2) comprising a second secure execution platform (SEP2) adapted to process a target application (App2), and wherein:
- said first secure execution platform (SEP1) is adapted via said secure application (App1) to:
- generate a random scrambled image (Rs) comprising a plurality of characters (vc);
- transmit said random scrambled image (Rs) to said host application (App3);
- upon reception of selected positions (Ps) on said random scrambled image (Rs), map said selected positions (Ps) to a private code (PCODE);
- cipher said private code (PCODE);
- transmit said private code ciphered (PCODEc) to said target application (App2);
- said first processor (PR1) is adapted via said host application (App3) to:
- receive said random scrambled image (Rs) from said secure application (App1) and display said random scrambled image (Rs) on said user interface (IHM);
- transmit said selected positions (Ps) on said random scrambled image (Rs) to said secure application (App1);
- said second secure execution platform (SEP2) is adapted via said target application (App2) to:
- receive said ciphered private code (PCODEc) from said secure application (App1);
- decipher said ciphered private code (PCODEc) to obtain said private code (PCODE); and
- execute an action (A) based on said private code (PCODE).

2. A system (SYS) according to claim 1, wherein the first secure execution platform (SEP1) and the second secure execution platform (SEP2) is a same secure execution platform which is a trusted execution environment (TEE).

3. A system (SYS) according to claim 1, wherein the first secure execution platform (SEP1) is a trusted execution environment (TEE) and the second secure execution platform (SEP2) is a secure element (SE).

4. A system (SYS) according to claim 1, wherein the first secure execution platform (SEP1) is a secure element (SE1) and the second secure execution platform (SEP2) is a secure element (SE2).

5. A system (SYS) according to claim 1 or claim 3 or claim 4, wherein said first electronic device (PD1) is a portable electronic device and said second electronic device (PD2) is a remote server (RSR).

6. A system (SYS) according to any one of the previous claims 1 to 5, wherein said first electronic device (PD1) and said second electronic device (PD2) are a same portable electronic device.

7. A system (SYS) according to any one of the previous claims 1 to 6, wherein said first electronic device (PD1) is a mobile phone (MB), or a tablet, or a smart phone, or a notebook.

8. A system (SYS) according to any one of the previous claims 1 to 7, wherein the target application (App2) is a bank payment application (EMV) or a one-time password generation application (OTP).

9. A first electronic device (PD1) for securely entering a private code (PCODE), said first electronic device (PD1) comprising a user interface (IHM) and a first unit processor (PR1) adapted to process a host application (App3), wherein said first electronic device (PD1) further comprises a first secure execution platform (SEP1) adapted to process a secure application (App1), and wherein:
- said first secure execution platform (SEP1) is adapted via said secure application (App1) to:
- generate a random scrambled image (Rs) comprising a plurality of characters (vc);
- transmit said random scrambled image (Rs) to said host application (App3);
- upon reception of selected positions (Ps) on said random scrambled image (Rs), map said selected positions (Ps) to a private code (PCODE);
- cipher said private code (PCODE);
- transmit said private code ciphered (PCODEc) to a target application (App2) within a second secure execution platform (SEP2) of a second electronic device (PD2);
- said first unit processor (PR1) is adapted via said host application (App3) to:
- receive said random scrambled image (Rs) from said secure application (App1) and display said random scrambled image (Rs) on said user interface (IHM); and
- transmit said selected positions (Ps) on said random scrambled image (Rs) to said secure application (App1).

10. A first electronic device (PD1) according to claim 9, wherein the first secure execution platform (SEP1) and the second secure execution platform (SEP2) is a same secure execution platform which is a trusted execution environment (TEE).

11. A first electronic device (PD1) according to claim 10, wherein the first secure execution platform (SEP1) is a trusted execution environment (TEE) and the second secure execution platform (SEP2) is a secure element (SE).

12. A first electronic device (PD1) according to claim 11, wherein the first secure execution platform (SEP1) is a secure element (SE1) and the second secure execution platform (SEP2) is a secure element (SE2).

13. A first electronic device (PD1) according to the previous claim 11, wherein said private code (PCODE) is ciphered using public key algorithm.

14. A first electronic device (PD1) according to the previous claim 13, wherein:
- said first unit processor (PR1) is further adapted via said host application (App3) to:
- request a certificate chain (CCE) to said target application (App2), said certificate chain (CCE) comprising a public key (Kpuc);
- receive said certificate chain (CCE) from said target application (App2) of said second electronic device (PD2);
- transmit said certificate chain (CCE) to said secure application (App1);
- said first secure execution platform (SEP1) is further adapted via said secure application (App1) to:
- receive said certificate chain (CCE) from said host application (App3);
- check said certificate chain (CCE);
- if said certificate chain (CCE) is valid, store said public key (Kpuc).

15. A first electronic device (PD1) according to any one of the previous claim 9 to 14, wherein:
- said first unit processor (PR1) is further adapted via said host application (App3) to:
- request a challenge (Ch) to said target application (App2);
- receive from said second secure execution platform (SEP2) a challenge (Ch) generated via said target application (App2);
- transmit said challenge (Ch) to said secure application (App1);
- said secure execution platform (SEP1) is further adapted via said secure application (App1) to receive said challenge (Ch) and to cipher said private code (PCODE) based on said challenge (Ch).

16. Method (MTH) for securely entering a private code (PCODE) on a first electronic device (PD1), said first electronic device (PD1) comprising a user interface (IHM) and a first unit processor (PR1) adapted to process a host application (App3), wherein said method (MTH) comprises:
- the generation of a random scrambled image (Rs) comprising a plurality of characters (vc) by means of a first secure execution platform (SEP1) of said first electronic device (PD1) via a secure application (App1);
- the transmission of said random scrambled image (Rs) to said host application (App3) by means of said first secure execution platform (SEP1) via said secure application (App1);
- the reception of said random scrambled image (Rs) and the display of said random scrambled image (Rs) on said user interface (IHM) by means of said first unit processor (PR1) via said host application (App3);
- the transmission of said selected positions (Ps) on said random scrambled image (Rs) to said secure application (App1) by means of said first unit processor (PR1) via said host application (App3);
- upon reception of selected positions (Ps) on said random scrambled image (Rs), the mapping of said selected positions (Ps) to a private code (PCODE) by means of said first secure execution platform (SEP1) via said secure application (App1);
- the ciphering of said private code (PCODE) by means of said first secure execution platform (SEP1);
- the transmission of said ciphered private code (PCODEc) to a target application (App2) of a second electronic device (PD2) within a second secure execution platform (SEP2) by means of said first secure execution platform (SEP1) via said secure application (App1);
- the reception of said ciphered private code (PCODEc) by means of said second secure execution platform (SEP2) via said target application (App2);
- the deciphering of said ciphered private code (PCODEc) to obtain said private code (PCODE) by means of said second secure execution platform (SEP2) via said target application (App2); and
- the execution of an action (A) based on said private code (PCODE) by means of said second secure execution platform (SEP2) via said target application (App2).
